# EUROPEAN PATENT SPECIFICATION

(11) **EP 0 432 896 B1**
(45) Date of publication and mention of the grant of the patent: **04.03.1998**
(21) Application number: 90312337.0
(22) Date of filing: 12.11.1990
(51) Int. Cl.: G06K 15/02, G06T 11/00

(54) **Conversion of image data stream into output data for printing or displaying the image**
Bilddatenstromumsetzung in Ausgangsdaten zur Bilddruckstellung oder -anzeige
Conversion d'un flot de données d'image en données de sortie pour imprimer ou afficher l'image

(30) Priority: 15.11.1989 US 437428
(43) Date of publication of application: 19.06.1991
(73) Proprietor: International Business Machines Corporation, Armonk, N.Y. 10504 (US)
(72) Inventor: Birk, Yitzhak, Palo Alto, CA 94306 (US); McCrossin, James Melvin, San Jose, CA 95139 (US)
(74) Representative: Burt, Roger James, Dr.

(56) References cited:
- WO-A-89/06400
- WO-A-91/15831
- PROCEEDINGS IEEE COMPUTER SOCIETY CONFERENCE ON PATTERN RECOGNITION AND IMAGE PROCESSING, June 1982, LAS VEGAS, USA pages 405 - 410 S.M. GOLDWASSER 'Hardware Considerations in the Implementation of a Segment Display Processor
- Architecture'

## Description

This invention relates to the conversion of a data stream representing an image to be printed and displayed into a form in which it can be used to produce the printed or displayed image.

Once the datastream has been generated, for it to be printed or displayed on a page it must be converted into a collection of several million numbers, each number representing the colour of one picture element (pel) on the page. This collection of numbers is called the "pagemap", and the conversion process is referred to as "rasterisation".

The transition from typewriter-like printers (having a fixed set of preformed characters that can only be positioned at specific places on a page) to all-points-addressable ("APA") printing devices, in which a page consists of millions of tiny dots (also known as "picture elements", or "pels" for short) has paved the way to computer printing of complex documents. The page-description computer program languages that have emerged to facilitate the process of specifying the content of complex pages require extensive processing in order to determine the darkness or colour of each of the millions of pels that constitute the content of each page. High-speed printers have advanced so rapidly as to outstrip the computer processing power available to determine page content, thus creating a processing bottleneck. The present invention relates to avoiding this bottleneck.

The printing process begins with an application program, such as a document formatter, which generates a specification of the content of a page in a page-description language ("PDL"). Page content expressed in a PDL is called a "datastream". Examples of PDL commands which could be included in a datastream are:
- 'Draw a circle of radius three inches (8 cm) centred five inches (13 cm) below the page top margin and four inches (10 cm) from the page left margin, and fill the circle with the colour magenta.'
- 'Write the words "Now is the time for all good" horizontally, beginning 3.75 inches (9.5 cm) below the page top margin and 1 inch (2.5 cm) from the page left margin, using the font "Times Roman" in a size of 12 printer points.'

The determination of which objects (or parts of objects) are visible in the final pagemap or display is usually made differently for two-dimensional ("2-D") objects than for three-dimensional ("3-D") ones. 3-D objects have the third dimension of depth, and their visibility is determined by depth information which is an integral part of the description of the object. Since the objects contain the depth information, the order in which the related data is rasterised and applied to the pagemap is not important.

In the case of 2-D objects, the visibility of an object is typically determined by a combination of its location in the datastream and a "mixing mode". In the "overpaint" mixing mode, for example, a "later" object always hides an "earlier" one. More generally, in mixing modes the new value of a pel which is being coloured by new object data is always a predetermined function of the old value and the pel colour provided by the new object data. For this to be done correctly, however, different objects that affect the same pel must do so in the same order as their order of appearance in the datastream. The use of mixing modes to determine visibility adds some characteristics of a third "depth" dimension to the rasterisation of the data of two-dimensional objects, and such rasterization is therefore often referred to as "2-D rasterization".

The adoption of all-points-addressable (APA) printing in conjunction with "advanced function" PDLs has brought about a dramatic increase in the amount of processing required for the rasterisation of the data for a page. A rasteriser may now be required to process fonts whose characters are described by curves representing their outlines. The characters may be in scales of arbitrary sizes and rotated at arbitrary angles. The rasteriser may also be required to change the scale (expand, contract or stretch) of graphical objects, rotate them, and convert them to bitmaps, as well as to change the scale and rotate already-bitmapped images. Furthermore, masks may be used to limit ("clip") the scope of an object, and various mixing modes may be used to specify the result of placing overlapping objects. Finally, these PDLs also have the features of general-purpose programming languages, such as conditional branching, which require processing akin to general-purpose digital computers such as mainframes and personal computers. And recently the introduction of colour in printers has further increased the processing demands on rasterisers.

The simplest way to implement a rasteriser is with a single processor. However, as the required processing rate increases, the cost of the processor and the associated components, such as memory, increases dramatically, eventually making cost-effective high-speed printers an impossibility. Preparing pages for high-speed printers requires both faster and more powerful processing than is available from single moderate-cost microprocessors. Since, beyond a certain speed, the cost of a processor grows faster than its processing speed (i.e. 5 slow processors are less expensive than a single one that is 5 times faster), high-speed single-processor rasterisers are not cost-competitive.

To keep the cost of the rasteriser manageable, as well as for other reasons such as incremental growth capability, it is therefore highly desirable to have several inexpensive processors collaborate rather than use a single, very expensive processor.

Significant problems and challenges must be addressed when designing a multiprocessor rasteriser. The design should attain a significant degree of parallelism, in order to achieve a high overall processing rate. The design should minimise overhead and duplication of effort by the processors, since these increase the total amount of work done for a given page, and hence reduce the effective increase in performance. The design should minimise the sensitivity of processor utilisation to page content. Further the design should require less memory than a single-processor rasteriser of equal performance, in order to make it competitive.

Beyond these goals, two essential requirements must be met. First, the datastream environment (cursor position, scale factor, current font, etc.) must be available at the beginning of each segment so that its processing can begin immediately independently of other segments. Second, the impressions of the segments on the pagemap must not overlap, because if they do the order in which the segments are processed and their impressions are applied may affect the final appearance.

The prior art contains several approaches toward multi-processor rasterization. In "pipelined rasterisers" the rasterization is broken into stages, and these are "pipelined" so that a different processor works on each stage, passing its results to the processor working on the next stage along the pipeline. These rasterisers satisfy both the first and second requirements, since every processor sees the entire datastream in the correct order, and only one processor updates the pagemap. The pipelined design is also quite efficient in terms of memory requirements. However the level of parallelism is limited by the number of possible stages to be pipelined, which is no more than two or three. Furthermore, the relative processing load on the different pipelined processors is sensitive to the page content. As a result, pipelined rasterisers are usually no more than twice as fast as single-processor rasterisers (i.e. their speedup factor is usually smaller than two).

In "page-parallel" rasterisers each processor works on a different page. With this design the first requirement is usually easy to satisfy, since sufficient information is usually available at the beginning of the page. The second requirement is always satisfied since pages (by definition) do not overlap, and a high degree of parallelism is achievable. However, very large amounts of memory are required and the rasterization time of a single page is not reduced. Also, processor utilisation drops significantly whenever the page-rasterization time is highly variable (such as when simple and complex pages are mixed together), unless much more memory is used. Since pages must be printed in a specific order, when a page-parallel rasteriser is faced with a difficult page followed by several easy pages, the printing engine (the printer) along with all but one of the processors must lie idle, waiting for the processor working on the difficult page to complete it.

In rasterisers which use "functional parallelism", blocks of different types (e.g., image, text, graphics) are rasterised independently and the results are merged sequentially into the pagemap. This can only offer moderate parallelism due to the limited number of types of blocks. Further, the effective parallelism achieved in a given page is very sensitive to the relative processing loads for the different types and hence to the content of the page. Finally, the last part of the rasterization, in which the blocks are merged into the pagemap, is not parallelised.

Efforts to create rasterisers which exploit "geographic parallelism" have not succeeded without limiting the mixing mode to "OR", which causes superposed images to be merged together without regard for which should overlap the other. Geographical parallelism is based on the intuition that it makes sense to build different regions of a page in parallel. However, the perceived need to satisfy the second requirement at the outset of the rasterization process has prevented the realisation of this idea for other mixing modes.

"3-D rasterisers with Z-buffers" are exemplified by the "Superdisplays" proposed by Pavicic, in which "object processors" prepare rasterised "objects" and send them to "image processors" (smart memory). Each rasterised object from a given location is fed to a designated image processor for that location. The object includes an intensity "I" and a "z" value (depth) for each pel. Whenever an image processor receives a new object having (x,y,z,I) values, it compares the z value with the one it is currently holding. If the new value of z is larger than the old one (i.e. if the new object is deeper), the image processor discards the new entry, otherwise it replaces the old value with the new one. It is possible to keep around several values to accommodate objects which only partly colour pels. The Z-buffer design is aimed at displays rather than printers. In display rasterisers, typically, lists of independent 3-D objects undergo incremental changes, such as the addition or deletion of new objects, and changes to old objects. Z-buffers are not very efficient for batch 2-D rasterisations of entire displays (pagemaps), since their image processors update pels individually, thus not taking advantage of the fact that with 2-D objects and an overpaint mixing mode (also known as order-implied depth), the last object covers all previous ones. Even if the mixing mode is not overpaint, the same operation is performed on all affected pels and incremental update is inefficient. Thus, most APA printer rasterisers use batch rasterization since successive pages are not mere updates of previously printed pages. Also Z-buffers rely heavily on the notion of overpainting of a deep object by a shallow one, and do not lend themselves to more complicated operations in which the resulting intensity and colour are an arbitrary function of the past ones and new ones, since to do so would require a possibly infinite list of past (z,I) values for every pel (Z-buffer), there being no concept of completing the rasterization for a given depth range. Finally, Z-buffer technology has no concepts of finding state-independent objects and resource preparation (discussed below).

The "Raster Processing Machine" (RPM) described by A. Ben-Dor and Brian Jones, Versatec, in "New Graphics Controller for Electrostatic Plotting", IEEE CG&A, pp. 16-25, January 1986, was developed for electrostatic plotters which do not have a full pagemap. Incoming graphical objects are converted sequentially (not in parallel) into an internal format, which produces a bottleneck limiting the performance of the rasteriser. The converted objects are then sorted by geographic location into bins corresponding to the size of the raster buffers of the machine (bands of pelmap). Once this process is completed, the bins are processed, possibly in parallel, and the results are placed into the appropriate partial pelmaps. The partial pelmaps are then combined together without regard for the sequencing of objects in the data stream. If two objects are superposed on the page they are blended together and printed.

EP-A-0,355,167 discloses a technique for converting graphic data between a first format used by a first graphic data processing system and a second format used by a second graphic data processing system. According to this technique, the graphic data is sorted into basic graphic elements, these basic elements are then converted by suitably inserting edit partition records and edit records, and the converted elements are stored as an intermediate data file. Finally, the data of the intermediate file is converted into the second format.

The object of the present invention is to provide an improved apparatus and method for converting an image data stream into data for use in printing or displaying the images in pages.

The present invention relates to apparatus for converting an image data stream into output data for use in printing or displaying the image in a page comprising dividing means for dividing the image data into blocks of data, and processing means for processing the blocks of data so as to generate the output data.

According to the invention the apparatus is characterised in that said dividing means comprises means for selecting items of image data to form said blocks of data, each said block of data comprising enough information about its state to enable it to be handled independently by the processing means; and in that said processing means comprises the following elements provided in a pipelined arrangement, each element consisting of a plurality of processors arranged to operate in parallel: first converting means for converting each item of image data in said blocks into an intermediate form object, selecting means for selecting said intermediate form objects so as to form groups of objects, each group relating to a geographical area of a page in which a portion of said image is to be printed or displayed, and second converting means for converting said groups of objects into output data for use in printing or displaying each portion of said image in the corresponding geographical area of said page.

The invention also relates to a method for converting an image data stream into output data for use in printing or displaying the image in a page comprising dividing the image data into blocks of data, and processing the blocks of data so as to generate the output data.

According to the invention the method is characterised in that said dividing operation comprises selecting items of image data to form said blocks of data, each said block of data comprising enough information about its state to enable it to be handled independently during said processing operation; and in that said processing operation comprising the following operations performed in a pipelined manner, each operation being performed by a plurality of processors arranged to operate in parallel;
(a) a first conversion operation (17) for converting each item of image data in said blocks into an intermediate form object (20),
(b) selecting (23) said intermediate form objects (20) so as to form groups of objects (26), each group relating to a geographical area of a page in which a portion of said image is to be printed or displayed, and
(c) a second conversion operation (31) for converting said groups of objects into output data (13) for use in printing or displaying each portion of said image in the corresponding geographical area of said page.

In order that the invention may be more readily understood, an embodiment will now be described with reference to the accompanying drawings, in which:
Fig. 1 is a block diagram of a multi-processor printer rasteriser according to the invention,
Fig. 2 is a block diagram of the first state of the rasteriser of Fig.1, during which the scan processor separates the incoming PDL datastream into state-independent blocks,
Fig. 3 is a block diagram of the second stage of the rasteriser of Fig. 1, during which intermediate-form objects and resource requests are prepared by the block processors,
Fig. 4 is a block diagram of the resource preparation process of the rasteriser of Fig. 1,
Fig. 5 is a block diagram of the third stage of the rasteriser of Fig. 1, during which the sort processors sort the intermediate-form objects into geographical bins,
Fig. 6 is a block diagram of the fourth stage of the rasteriser of Fig. 1, during which the bin processors convert the sorted intermediate-form objects and the prepared resources into rasterised pelmaps and build the pagemap,
Fig. 7 is a schematic diagram of the operation of the rasteriser of Fig. 1, showing the parallel processing within each stage and the pipelining between stages,
Fig. 8 is a programming flowchart corresponding to the pseudocode of Table I, and
Fig. 9 is a programming flowchart corresponding to the pseudocode of Table II.

The arrangement to be described is applicable whenever data corresponding to a high-level description of a collection of two-dimensional objects is to be converted into a single pagemap or any other type of pel-map representation. The rasteriser 10 to be described herein prepares pagemaps for all-points-addressable (APA) computer-driven printers.

The main technical advance provided by this arrangement is cost effectiveness. The cost of producing a high-speed multi-processor printer rasteriser 10 using the arrangement described will be significantly less than the cost of producing a single-processor rasteriser of equal speed. Other advantages provided by the arrangement described include: (i) its efficient use of hardware, i.e. the minimisation of overhead and duplicated work; (ii) the flexibility offered by its design; (iii) its scalability, i.e. the ease by which the number of processors in any stage can be increased or reduced; and (iv) the slow growth in the memory requirements as the number of processors is increased. The efficient use of hardware in the arrangement described is the result of careful design of the synchronisation among the collaborating processors, and of a careful allocation of memory among different uses. The flexible design and scalability is primarily provided by the use of general purpose processors for all stages of the rasterization, so that any processor may work on any stage.

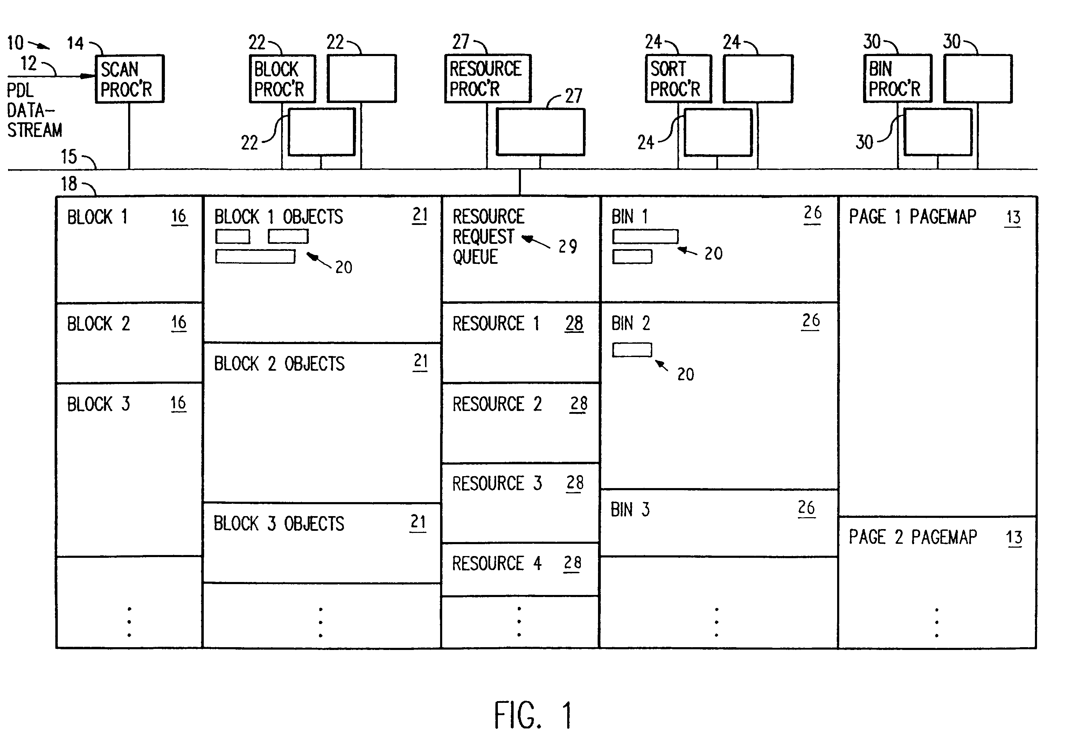

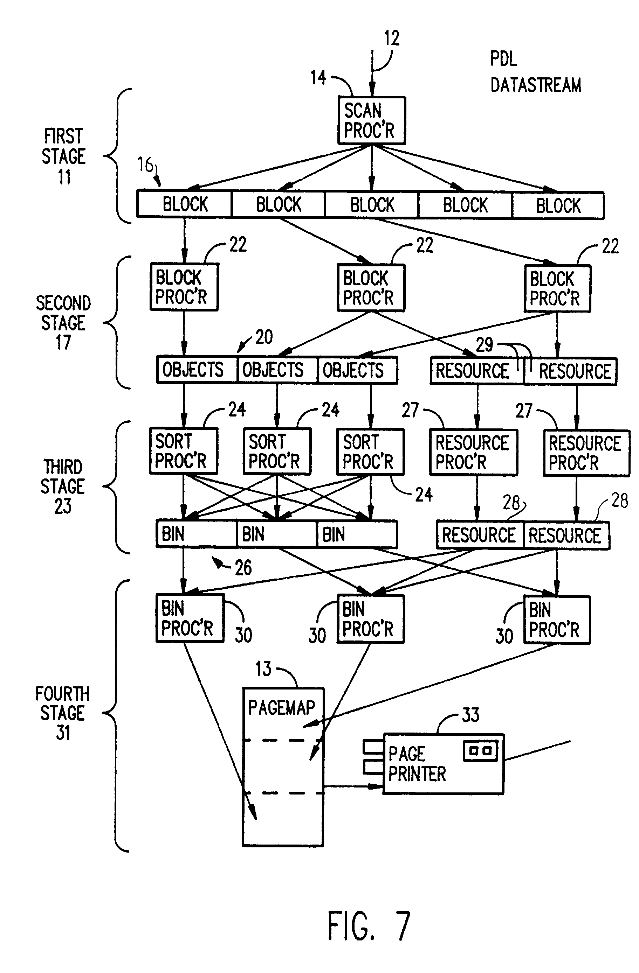

Referring first to Figs. 1 and 7, the rasteriser 10 to be described converts an object-oriented "datastream" 12 (which describes the content of a page in a page description language, or "PDL") into a "pagemap" 13 (a rasterised set of bits) to be sent to an all-points-addressable (APA) device such as (preferably) a laser printer. The conversion (rasterising) is done in four stages, using a plurality of processors in all the stages except the first.

In the first stage 11, a single "scan processor" processor 14 scans the incoming PDL datastream 12 to identify state-independent "blocks" 16. Each block is tagged with a "sequence number" and stored in a common memory 18 available to all the processors, including those working on subsequent stages.

In the second stage 17, the PDL commands in each block 16 are converted sequentially into one or more "intermediate-form objects" 20 by a plurality of "block processors" 22, and stored in a portion of the common memory 18. Whenever a block processor 22 becomes available it takes the next block 16, prepares intermediate-form objects 20 sequentially from the start of the block, and stores the objects along with the sequence number of the block in a portion 21 of the common memory 18 reserved for the objects of that block. This stage is thus carried out in parallel for different blocks by the plurality of block processors 22.

In the third stage 23, a plurality of "sort processors" 24 sort the stored intermediate-form objects 20 into "bins" 26 according to their target geographical regions on the pagemap 13. Before beginning the work on a pagemap 13, the pagemap is divided into non-overlapping "geographical regions", and a bin 26 is constructed for each region. Again, objects 20 belonging to the same block 16 are processed sequentially by a single sort processor, but different blocks can be processed in parallel by several sort processors.

"Resource preparation" is done concurrently with the second and third stages 17, 23 by "resource processors" 27. From "resource preparation requests" 29 issued by the block processors 22 in the second stage 17 for resources such as characters, punctuation, numbers and symbols which are used with a plurality of objects 20, the resource processors 27 produce intermediate-form data 28 and store this resource data in memory where it can be reused by the bin processors 30 of the fourth stage 31 (see below) without repreparation.

Finally, in the fourth stage 31, a plurality of "bin processors" 30 rasterise the geographically sorted intermediate-form objects 20 stored in the bins 26, and store the resulting rasterised data (partial pagemaps, or "pelmaps") in memory as a pagemap 13 of the finished page. The pagemap 13 is then sent to an APA printer 33 to produce the actual, printed page specified by the datastream 12. To preserve the consistency of the finished pagemap 13 produced by this process, the intermediate-form objects 20 in any given bin 26 are processed by a single bin processor 30 in order by block sequence number.

Each of the second, third and fourth stages (17, 23, 31), as well as the resource preparation process, is done in parallel by a plurality of processors. Because the first stage scan processor 14 produces state-independent blocks 16 having their own data processing environments, the second stage block processors 22 can process the blocks 16 concurrently, i.e. in parallel. The third stage sort processors 24 sort the intermediate-form objects 20 into the bins 26 in parallel, each sort processor operating on the objects 20 stored for a single block 16. The fourth stage bin processors 30 rasterise the contents of the bins 26 concurrently and independently of each other, but each bin is processed sequentially by a single bin processor. Whenever a resource processor 27 becomes free, is dequeues the next resource preparation request in the resource preparation request queue 29 (thereby bringing the next request to the head of the queue), and prepares the intermediate-form data 28 for the corresponding resource. The intermediate form data for the resources can thus also be prepared in parallel by a plurality of processors.

All four stages are pipelined, so that the next stage can begin even before the preceding stage has been completed. A block processor 22 begins working on a block 16 as soon as the scan processor 14 identifies the block datastream processing environment. A sort processor 24 begins sorting a block intermediate-form object 20 as soon as the block processor 22 has begun to generate the intermediate-form objects, and before the block processor has finished the generation process. A bin processor 30 begins working on a bin 26 of sorted intermediate-form objects 20 as soon as the sort processors 24 start filling that bin, and before the sort processors have finished the filling process. However, a bin processor 30 working on a given bin 26 may not begin work on the objects 20 in that bin which were generated from a successive block 16 until the bin processor encounters the "end-of-block" markers for all previous blocks, since additional objects for those previous blocks may yet arrive from sort processors 24. This requirement is necessary to ensure the consistency of the final pagemap 13.

The scan processors 14, block processors 22, resource processors 27, sort processors 24, and bin processors 30, are all preferably single type general purpose microprocessors which communicate with the common memory 18 over a conventional common data bus 15. The processors may be programmed to work on any stage of the rasterization process, perhaps with the exception of the scan processor. This maximises the flexibility of the design, permitting (among other things) dynamic assignment of memory for different purposes and dynamic assignment of processors to heavily used stages so as to prevent bottlenecks from developing. High-bandwidth communications between the processors and the common memory 18 are needed.

### Scanning - First Stage

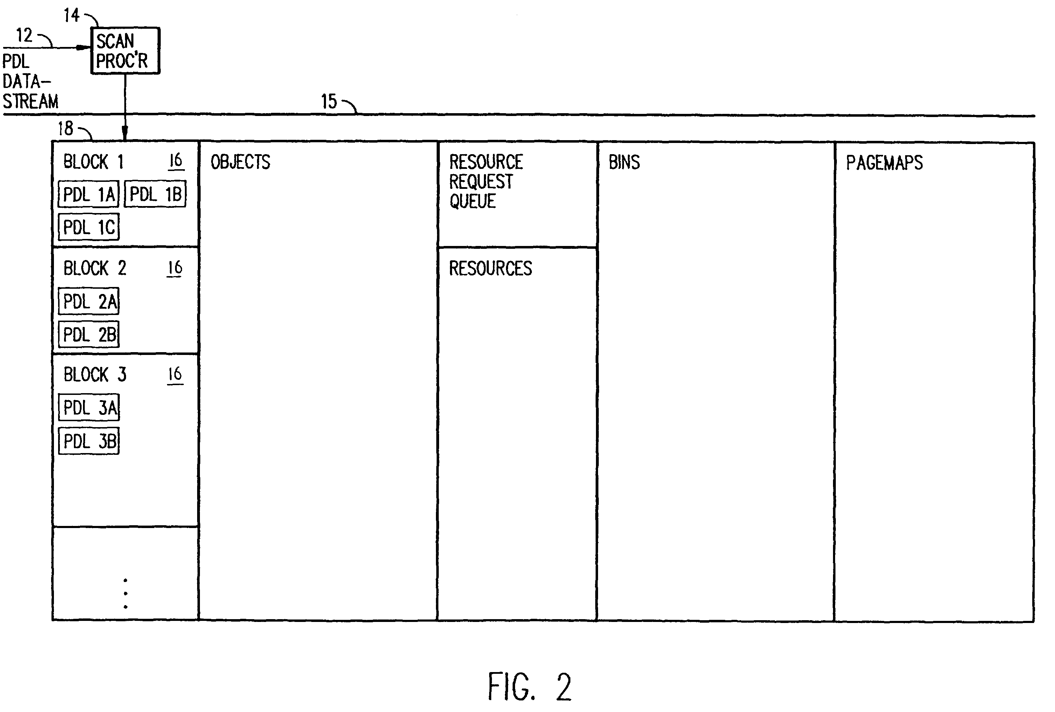

As shown in Fig. 2, the scan processor 14 receives as its input the datastream 12, which describes a sequence of pages in some page-description language (PDL). The scan processor output is a slightly modified datastream, which is essentially the original datastream 12 partitioned into state-independent blocks 16 along with state information on block boundaries and a block sequence number for each block. The blocks are "state-independent", which means that each block 16 contains sufficient information regarding its datastream processing environment (its "state") to allow the preparation of intermediate-form objects 20. Such state information includes, for example, the current font being used for text characters and symbols, and the current scale and rotation to be applied.

The details of the scan processor depend entirely on the PDL being processed. In general, commands such as:
"move to position x=2.45 inches (5.45 cm), y=7.43 inches (18.75 cm)",
"set current font to Times Roman Italic 12 point", and
"set graphics state to scale x=1.0, y=1.1, rotation 90 degrees" identify the beginnings of state-independent blocks. In the POSTSCRIPT PDL of Adobe Systems, Inc., commands such as "gsave" (graphics save) and "grestore" (graphics restore) can be used to identify blocks.

There is a trade-off between the amount of processing devoted to scanning and the resultant block sizes. A simple scan processor 14, for example, could simply look for page boundaries, thereby producing a single block 16 per pagemap 13 and simplifying the entire rasteriser 10. This is because all the objects 20 for any given pagemap would be generated by a single block processor 22 in the correct order, and so each bin 26 would be filled by a single sort processor 24. The end-of-block markers and associated synchronisation mechanism would thus no longer be required. Yet, even in this simple rasteriser, the pagemap 13 could be divided into geographical regions so as to allow a plurality of bin processors 30 to work on the same pagemap during the fourth (pagemap-building) stage 31, although the rasteriser memory requirements would be increased because the rasteriser must be able to store the datastream for a plurality of complete pages.

At the other extreme, a very complex scan processor 14 would generate many blocks 16 per pagemap 13. The optimum complexity of the scan processors 14 depends on the difficulty of identifying state-independent blocks 16 in the PDL datastream 12, and on the desired complexity of the rest of the rasteriser 10.

### Intermediate-form Objects - Second Stage

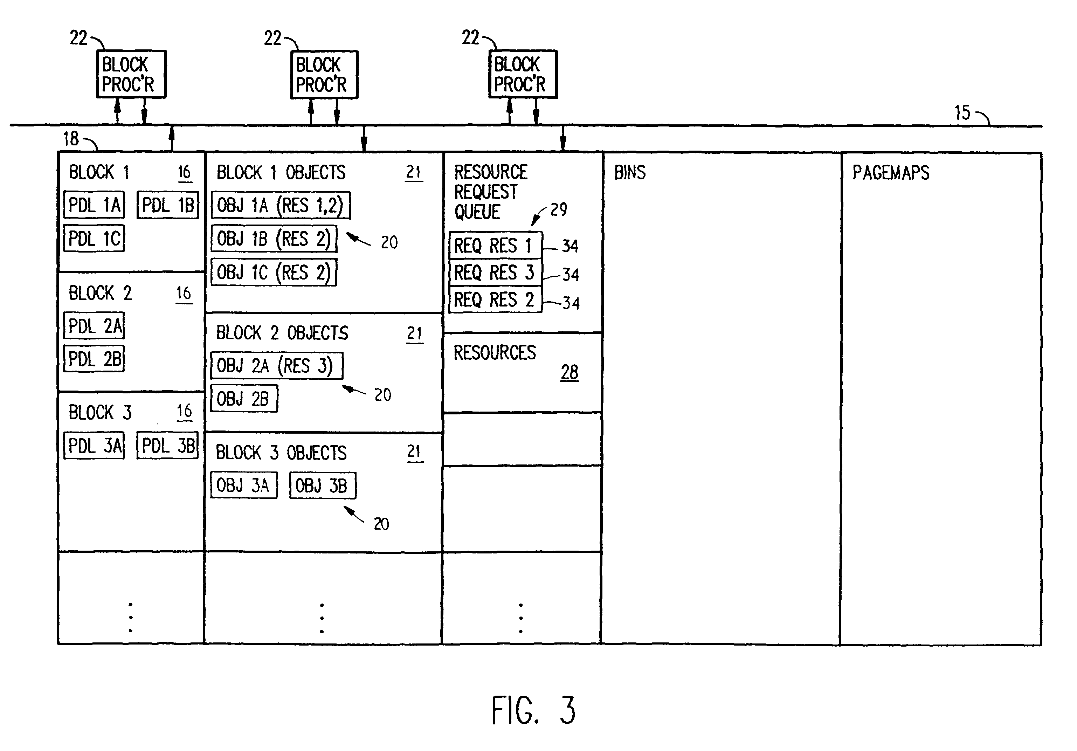

As shown in Fig. 3, the block processors 22 convert the state-independent datastream blocks 16 into intermediate-form objects 20 during the second stage. The form of the blocks clearly depends on the particular PDL being processed, and so the block processors programming must be tailored to the PDL. However, the resulting intermediate-form data 20 can be independent of the particular PDL input.

The second stage block processing is carried out in parallel for all the blocks 16 by a plurality of block processors 22. Each of the block processors 22 parses and interprets the PDL of the blocks 16, and executes complicated graphics operations such as rotation and scaling, and most of the rendering. The block processor 22 also identifies references to reusable resources such as text characters, and places requests 34 for the preparation of intermediate-form data for those resources in the resource preparation request queue 29, as described more fully below under the heading "Resource Preparation". The intermediate-form objects 20 generated from any given block 16 are generated sequentially by a single block processor 22 and are placed sequentially in a portion 21 of the common memory 18 reserved for that block. Therefore, it is sufficient to store the block sequence number only once per block.

To summarise, the second stage takes state-independent datastream blocks 16 and converts them in parallel into collections of intermediate-form objects 20. Each block 16 is processed by a different block processor 22, and the objects 20 resulting from any given block are jointly marked with the block sequence number and stored together. The second stage also produces resource preparation requests 34.

### Resource Preparation Process

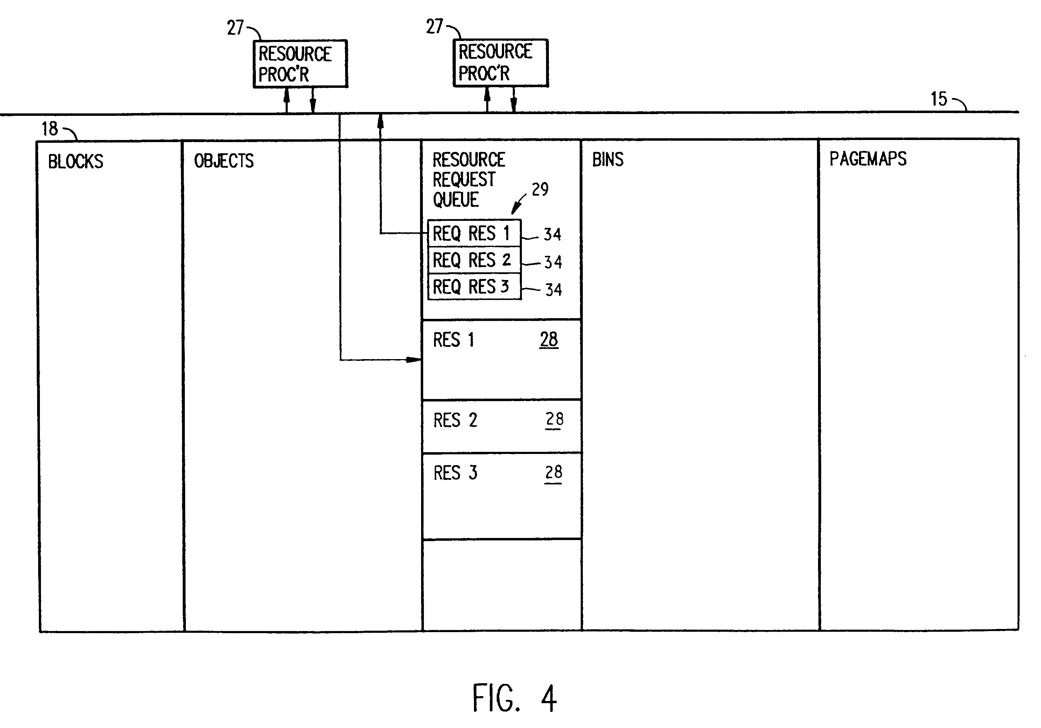

Resource data comprising intermediate-form data for resource items which are used with a plurality of objects 20 are prepared in parallel with the block processing and sorting of the second and third stages, as shown in Fig. 4.

In the second stage, whenever a block processor 22 determines that the datastream 12 specifies an unprepared reusable item (resource item), that block processor reserves a place 28 in the common memory 18 to store intermediate-form data for that resource item, and puts a "resource preparation request" 34 into a common queue (list) 29 of resource preparation requests. At the same time, the block processor 22 initialises a "resource reference count" for each resource item to keep track of the number of times that resource item is specified by the blocks 16. The block processor 22 then continues to process its block 16 without preparing the resource intermediate-form data. Each resource preparation request 34 is taken up in order from the resource queue 29 by one of the resource processors 27, which prepares the resource intermediate-form data 28 and stores it in the place reserved for it in the common memory 18.

Once a resource item has been requested, as a later block processor 22 encounters a specification of an already-requested resource item, it simply places in the intermediate-form object 20 under construction a pointer to the resource data 28 stored in memory, and updates that resource reference count so that the resource intermediate-form data 28 is not deleted prematurely. The pointer is then used by the bin processor 30 processing that object 20 to obtain the resource intermediate-form data 28.

In this way, intermediate-form data 28 for frequently-used resource items is prepared only once, thereby reducing duplicated effort and improving the rasteriser performance.

### Geographical Sorting - Third Stage

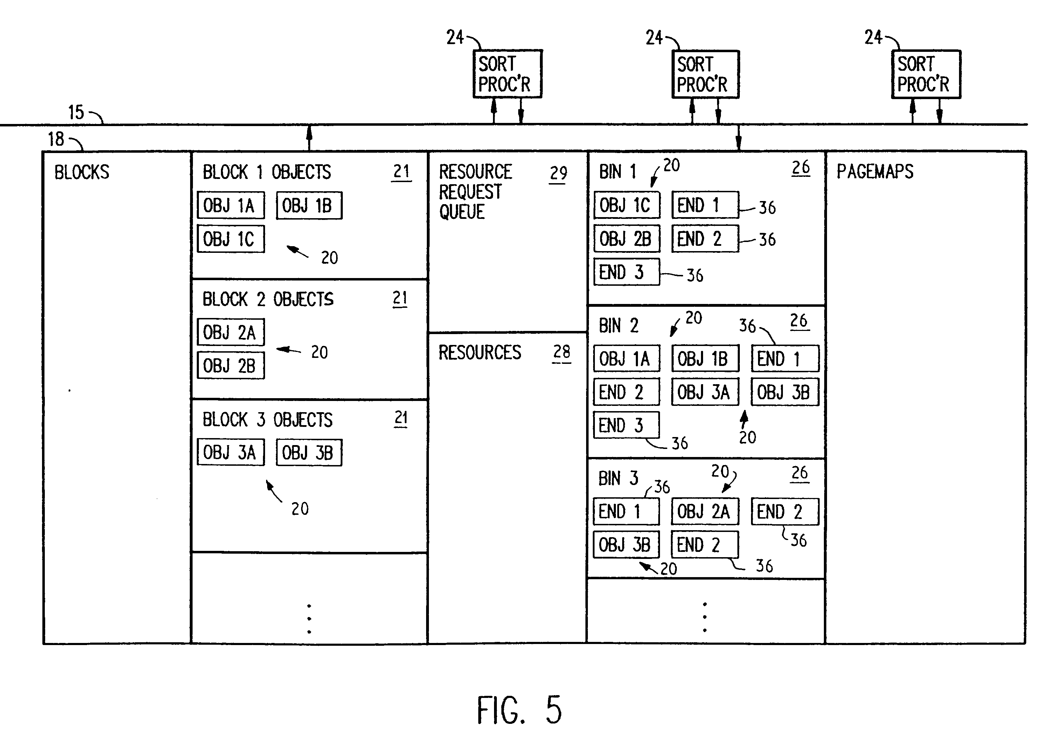

As shown in Fig. 5, in the third stage the intermediate-form objects 20 are sorted into bins 26 that correspond to geographic regions of the pagemap 13 being built.

The third stage sorting is carried out in parallel for different block groups 21 of objects 20 in a plurality of sort processors 24, but is performed sequentially within each block group of objects. The third stage does not depend on the input PDL, since the objects 20 to be sorted are in intermediate-form. The implementation details necessary for correctly sorting the objects 20 in order by both bin 26 and block number are described fully below.

The partitioning of the pagemap 13 into geographic regions is done before the third stage begins. The regions of the pagemap 13 are defined in advance to be non-overlapping and together to cover the entire page, and are known to each sort processor 24. At the same time, a number of "fourth-stage-work-queues" are created for each pagemap 13, one for each geographical region. These queues can be accessed by all the sort processors 24. In the arrangement being described a fourth-stage-work queue and the objects 20 defined by its entries together comprise the content of a "bin" 26. The choice of region shapes and intermediate-form object types is made to facilitate the sorting in this third stage. In the arrangement being described the regions are chosen to be horizontal bands of the page and the intermediate-form objects 20 are restricted to being either trapezoids or rectangles whose bases are parallel to the bands forming the regions. The partitioning of the pagemap is assigned to one or more of the processors essentially as a matter of design choice. If the first stage is parallelised hierarchically as described below, the initial "simple" scan processor 14 (which divides the datastream 12 into pagemap-sized superblocks) may define the regions for each pagemap it identifies. Alternatively, the regions may be defined uniformly for all of the pagemaps.

Each bin 26 is a designated area of the common memory 18 for storing the intermediate-form objects 20 to be printed (wholly or partly) in the bin's respective geographical region. Each object 20 is stored in the bin(s) 26 corresponding to the geographical region where the object will be placed in the pagemap 13, together with the object block sequence number in order to maintain the objects in block number order within each bin 26.

In the "sort" step of the third stage, each block 21 group of objects 20 is sorted into a number of temporary work areas, each work area corresponding to a geographic region of the pagemap 13, i.e. to a bin 26. Each sort processor 24 receives a series of intermediate-form objects 20 which were generated from a common datastream block 16 and stored together in that block's portion 21 of the common memory. Before beginning the sort step, the sort processor 24 acquires an allocation of a number of temporary work areas 26 within the common memory 18, one portion per geographic region, and places the block 21 sequence number at the beginning of every work area. The sort processor 24 examines each object 20 within the block portion 26 of memory to determine for which region(s) of the pagemap 13 it is destined, and places the object 20 in the temporary work area corresponding to each of these regions accordingly. If an object 20 spans several regions, it is placed in the work area for each region. When a sort processor 24 finishes sorting the group 21 of objects 20 of a given block 16 into temporary work areas it places an "end-of-block marker" 36 for that block in all of the work areas it acquired. The inclusion of the end-of block markers is explained below.

The sort processor 24 then inserts pointers into the fourth-stage-work-queue for each geographical region of the pagemap 13, the pointers pointing to the corresponding work areas that the sort processor 24 just created. These pointers are placed in positions in the fourth-stage-work-queues according to the block sequence number of the block 16 just sorted by the sort processor 24, so that the objects will be processed in the fourth stage in block number order. The work area used by the sort processor 24 is released by the sort processor at this time, but the work area memory is not deallocated until the fourth stage bin processors 30 have processed the objects 20 in the work area.

A pseudocode implementation of the third stage sorting is shown below in Table I.

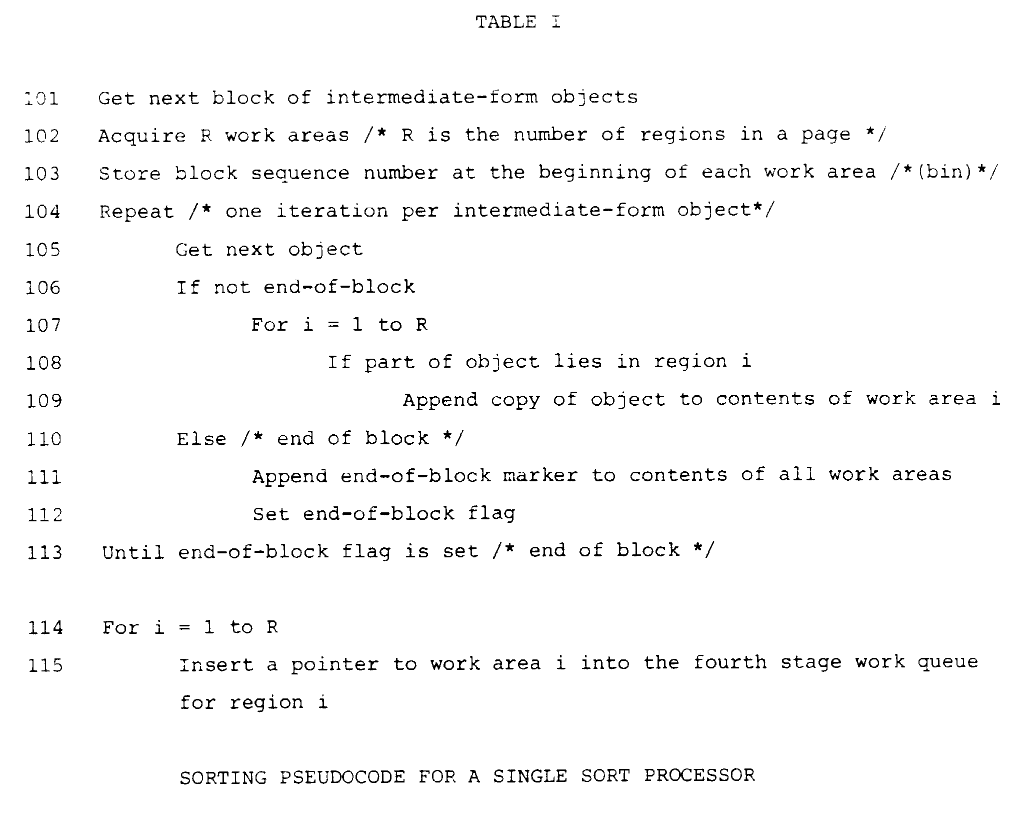

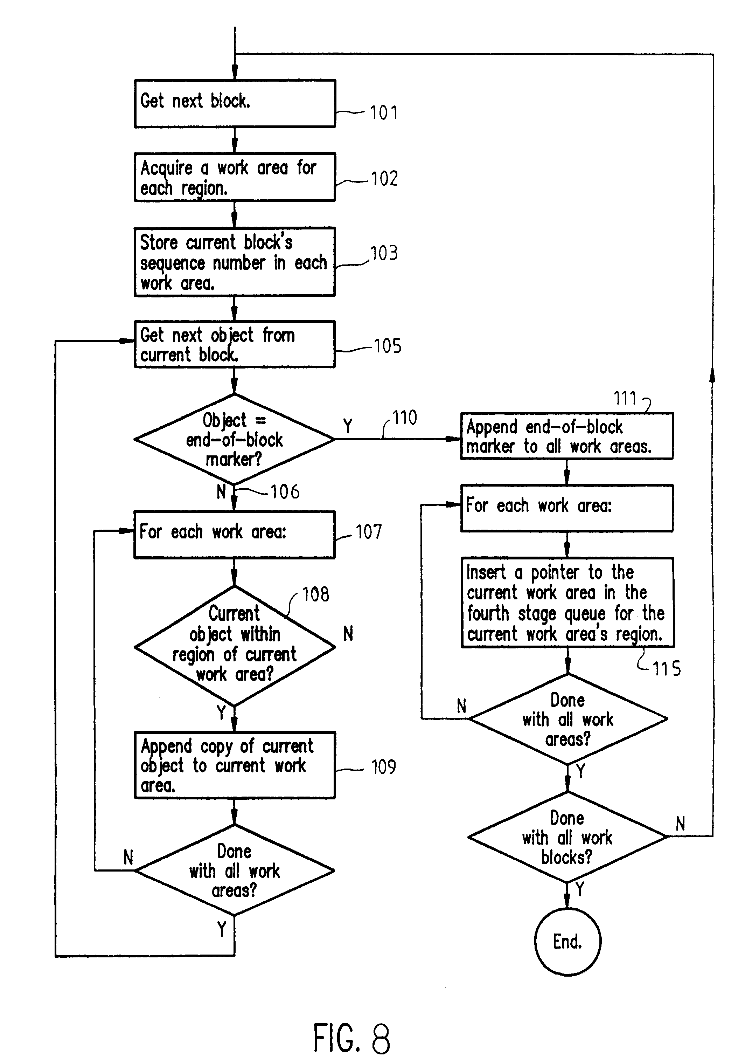

Fig. 8 contains a flowchart corresponding to the pseudocode of Table I. The reference numerals assigned to the boxes of the flowchart correspond to the line numbers of the pseudocode.

### Building the pagemap

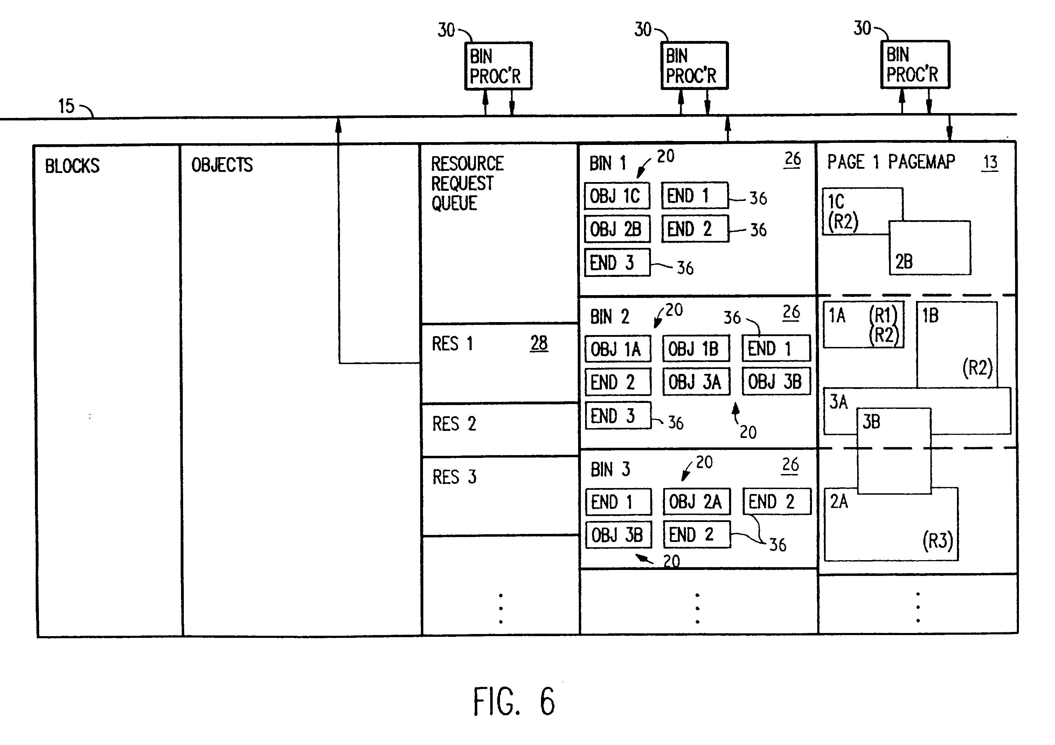

In the fourth and final stage, see Fig. 6, bin processors 30 convert the intermediate-form objects 20 stored in the bins 26 into pelmaps (collections of colour values of individual pels), and merge them into the pagemap 13 to complete the rasterisation process. Unlike the second and third stages where the parallelism is by block, the parallelism in the fourth stage is geographic since the bins 26 corresponding to different geographical regions are processed in parallel by different bin processors 30.

First, each bin processor 30 is assigned a bin 26, with no bin assigned to more than one bin processor. Thus only one bin processor 30 ever updates the region of the pagemap 13 corresponding to a particular bin 26.

Each bin processor 30 processes the objects 20 in its bin 26 in block number order, since the objects 20 are stored within each bin 26 in block number order by the sort processors 24 during the third stage. This block number ordering within each bin 26 maintains the correct order of objects 20 within the same region but generated by different blocks. Within each bin 26, the correct order of the objects 20 from a particular block is maintained by the sequential placement of those objects into the bin 26. The order among objects that were generated from different blocks (in parallel) is maintained by the block sequence numbers.

A bin processor 30 must finish all objects 20 in its bin 26 from a given block before starting on objects from the next higher numbered block. Since the objects 20 are generated by the block processors 22 in parallel with variable delay and duration, the bin processor 30 must be notified explicitly by the sort processors 24 that all objects from a particular block have been generated. This is accomplished by the sort processors storing of the end-of-block markers 36 in the bins 26.

Whenever a bin processor 30 encounters a reference to a resource item 28, it checks to see whether the resource intermediate-form data preparation has been completed. If the resource data preparation has not been completed, i.e. if the resource item is not ready, the bin processor 30 must wait for it. When the resource data 28 is ready, a bin processor 30 needing it uses the pointer placed in the intermediate-form object 20 to locate the resource intermediate-form data 28. The bin processor 30 converts the resource intermediate-form data 28 into a pelmap and places it in position in the pagemap 13. After using resource data 28 the bin processor 30 decrements the resource reference count. When a resource reference count is reduced to zero, meaning that the resources item is no longer needed, the resource intermediate-form data can be deallocated. Resource data deallocation is done as needed, so that more frequently used resource items are not immediately deallocated even though there may be no outstanding requests for them at a particular time. Suitable deallocation methods such as the "least recently used" and "least frequently used" methods are well known in the prior art.

When the pagemap 13 has been built, it is sent to a printer for printing. The printer 33 is a conventional all-points-addressable (APA) printer such as the IBM model 3812-002 PAGEPRINTER or the IBM model 4019 LASERPRINTER.

If there are more bins 26 than bin processors 30, a bin processor can be assigned a plurality of bins. When such a bin processor has to wait for objects 20 of one bin 26 to be prepared and sorted it can try to work on its other bin(s). If a bin processor 30 reaches the end of the pagemap 13 for its bins 26, it begins processing another bin which has not yet been assigned to a bin processor.

The fourth, pagemap-building, stage is clearly independent of the PDL used in the datastream 12. It also requires only relatively simple processing, though the volume of data to be processed is large. Even though this could profitably be done using specialised hardware, preferably general purpose microprocessors are used.

Table II shows a pseudocode implementation of the fourth, pagemap-building, stage.

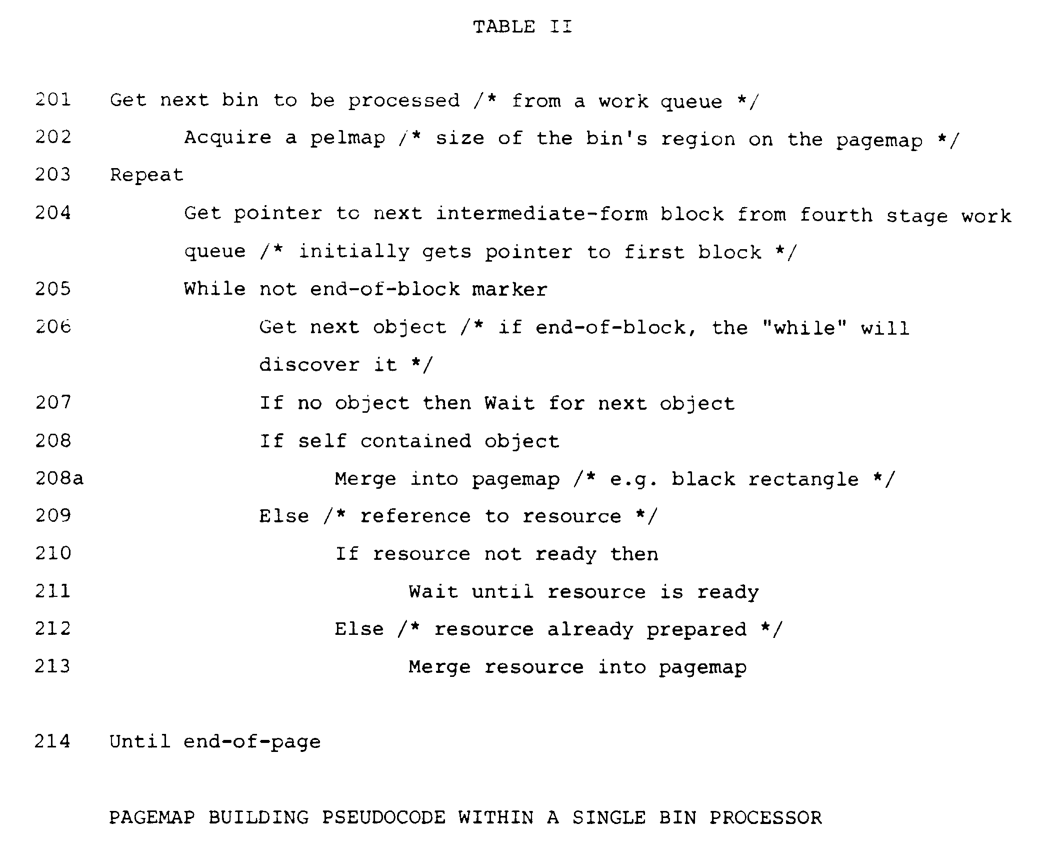

Line 207 represents the possibility that one of the block processors 22 is taking a long time. Having processed all the objects 20 from a particular block 16 and not encountered the corresponding end-of-block marker 36, the bin processor 30 knows that the block processor 22 has not yet finished processing all the objects 20 from that block. The bin processor 30 must simply wait until the block 16 has been fully processed and sorted. The block end-of-block marker 36 will then appear in the corresponding bin 26. Several suitable waiting and notification schemes which can be used here are well known.

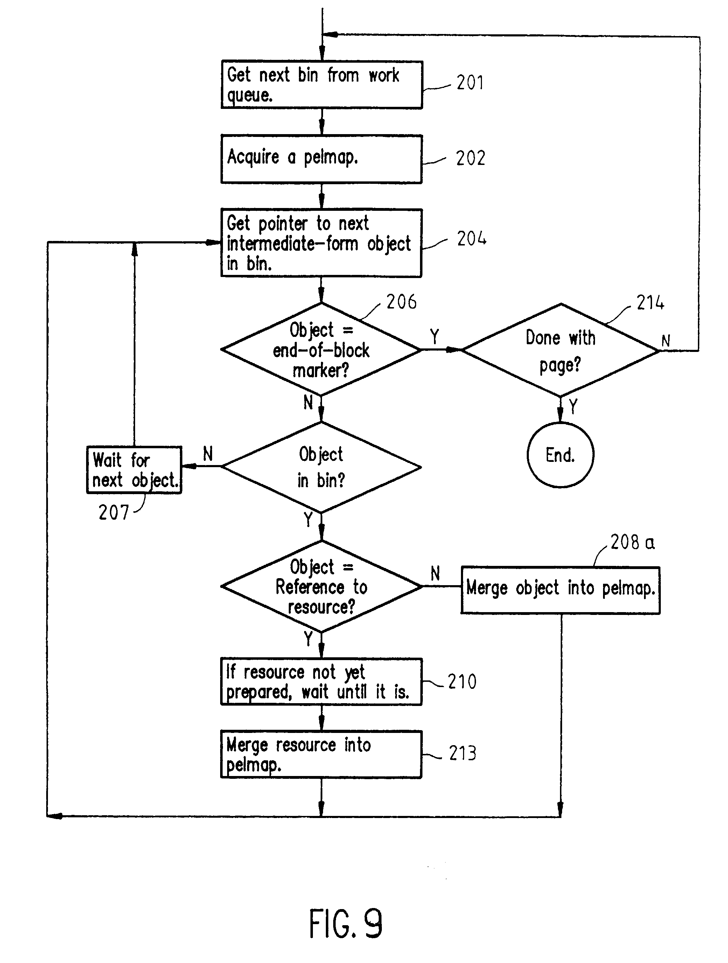

Fig. 9 contains a flowchart corresponding to the pseudocode of Table II. The reference numerals assigned to the boxes of the flowchart correspond to the line numbers of the pseudocode.

### Illustrative Example

The operation of the rasteriser 10 will now be considered in greater detail with reference to Figs. 2-6.

Referring first to Fig. 2, in the first stage the PDL datastream 12 is received by the scan processor 14 and divided into blocks 16. Only the first three blocks of the first page of the pagemap to be generated are shown, although a typical datastream would contain tens, hundreds or thousands of blocks specifying a plurality of pages. Each block contains fragments of the datastream PDL which will result in the generation of one or more objects in later stages of the rasteriszation. Thus one small fragment of the datastream may result in the generation of a plurality of objects. For example, a datastream command to draw a circle may be converted into a large number of trapezoidal objects. For purposes of illustration only, Figs. 2-3 show each object as having a unique corresponding fragment of the datastream in a block. BLOCK 1 is shown as containing PDL fragments PDL 1A, PDL 1B, and PDL 1C. Similarly, BLOCK 2 contains fragments PDL 2A and PDL 2B, and BLOCK 3 contains fragments PDL 3A and PDL 3B.

In the second stage 17 as illustrated in Fig. 3, a different block processor 22 converts the contents of each block 16 into a corresponding group 21 of intermediate-form data objects 20. Because the block processors 22 operate in parallel on the blocks 16, there is not necessarily any correspondence between a block's sequence number and the block processor which processes the block.

In this example of the second stage 17, the contents of BLOCK 1 are converted into three intermediate form objects, OBJ 1A, OBJ 1B, and OBJ 1C. Further, BLOCK 1 contains datastream fragments for two resource items which are used with a plurality of objects 20 and are identified as RES 1 and RES 2. The block processor 22 processing BLOCK 1 places resource intermediate-form data preparation requests 29 for these resources, REQ RES 1 and REQ RES 2, in the resource preparation request queue 29. The block processor also places pointers to the storage locations of the intermediate-form data 28 for these resource items in the objects which use the resource items. Thus, OBJ 1A contains pointers to data RES 1 and RES 2, and OBJ 1B and OBJ 1C contain pointers to data RES 2.

Similarly, BLOCK 2 is converted into intermediate form objects OBJ 2A and OBJ 2B and a pointer to resource data REQ RES 3, and BLOCK 3 is converted into objects OBJ 3A and OBJ 3B. It will be noted that the objects 20 are of varying size-size being typically (but not necessarily) related to the size or complexity of the resulting image portion.

The resource intermediate-form data preparation process is illustrated in Fig. 4. Two resource processors 27 take resource preparation requests 34 from the resource preparation request queue 29 and prepare and store the intermediate form data 28 of the requested resource items. The intermediate form data 28 is stored in the common memory 18 at the locations allocated by the block processors 22 which requested the preparation of the resource data during the second stage 17. Thus, request REQ RES 1 is processed and the intermediate-form data 28 for RES 1 is stored in the common memory 18. Similarly, requests REQ RES 2 and REQ RES 3 are processed to produce data 28 for RES 2 and RES 3.

The third stage 23 sorting of intermediate form objects 20 by geographical location is illustrated in Fig. 5, where three sort processors 24 sort the groups 21 of objects 20. As in the second stage 17, there is no necessary correlation between the sequence number of a block and the sort processor 24 which sorts the objects 20 contained in that block.

In this example of the third stage 23, the objects OBJ 1A and OBJ 1B of BLOCK 1 specify images which will be located in a geographical region of the page map 13 which has been assigned to BIN 2, and these objects (or more accurately, pointers to them) are placed in BIN 2. The third object OBJ 1C of BLOCK 1 is placed in BIN 1. The sort processor 24 then places end-of-block markers 36 END 1 for BLOCK 1 in all of the bins 26 for the pagemap 13 for which the datastream 12 is being rasterised.

Similarly, the objects of BLOCK 2 are placed in their respective bins, with OBJ 2A going into BIN 3 and OBJ 2B going into BIN 1 and object OBJ 3A of BLOCK 3 is placed in BIN 2. OBJ 3B overlaps into the regions of both BIN 2 and BIN 3, and is therefore placed in both of those bins.

The fourth stage 31, illustrated in Fig. 6, produces the pagemap 13 from the rasterised data stream. The parallel bin processors 30, each processing the objects 20 of a single bin 26, produce pelmaps of the geographic regions of their respective bins. These pelmaps together form the pagemap 13.

The bin processor which is processing the contents of BIN 1 first rasterises OBJ 1C, which requires rasterization of that object's associated resource data RES 2 (see Fig. 3). The result of this is placement of the rasterised image 1C which contains the rasterised resource data (R2) in the pelmap of BIN 1. The bin processor then processes the end-of-block marker 36 END 1, and proceeds to rasterise the object OBJ 2B to produce image 2B and to place this image in the pelmap in BIN 1. Image 2B is partially superimposed on image 1C, and, because the datastream 12 specifies overpaint mixing mode, image 2B (which appears later in the datastream) partially covers image 1C where they are superimposed. The bin processor 30 for BIN 1 then encounters the markers END 2 and END 3, and proceeds to begin processing the next bin.

The bin processor which is processing BIN 2 rasterises OBJ 1A and its resource data RES 1 and RES 2, producing image 1A containing rasterised resource data (R1) and (R2). Image 1B containing rasterised resource data (R2) is produced similarly, as is image 3A after the markers END 1 and END 2 have been encountered. As with BIN 1, because image 3A is superimposed on image 1B, and because OBJ 3A occurred later in the datastream 12, image 3A partially covers image 1B. Finally in BIN 2, object OBJ 3B which overlaps the regions of BIN 2 and BIN 3 is rasterised into image 3B, which is partially superimposed on and covers image 3A.

In BIN 3, image 2A containing rasterised resource data (R3) is placed in the pelmap, followed by that portion of image 3B which extends into the region of BIN 3.

In the end, the pagemap 13 for page 1 is assembled from the pelmaps which it comprises, and can then be sent to the printer for printing.

### Alternative Embodiments

It will be appreciated that, although a specific arrangements of the rasteriser 10 has been described herein for purposes of illustration, various modifications may be made without departing from the spirit and scope of the invention. In particular, while the arrangement described produces printer pagemaps, the principle of the arrangement is also applicable to displays used for the imaging of 2-dimensional objects, as well as other applications which need to convert high-level descriptions of two-dimensional objects into rasterised pagemaps or other pel map representations.

And although the first scanning stage of the arrangement described is performed sequentially by a single scan processor 14, the scanning of the blocks of the datastream 12 may be performed in parallel. In one such arrangement, an initial simple sequential scan processor will divide the datastream into blocks that contain the datastream for entire pages, each of which is then handed over to one of several parallel complex scan processors for separation into smaller state-independent blocks. In this way a block is divided into several state-independent sub-blocks, each of which has a sequence number, so that separate block processors and sort processors may work on the main block concurrently. In addition, the scan processor and block processors of the arrangement described may be specialised to handle particular types of blocks, in some ways similarly to the "functional" rasterisers of the prior art arrangements.

Also, while the arrangement described sorts all the objects of any given block by a single sort processor, it is contemplated that a plurality of sort processors may operate on objects of the same block provided that each object has been stored with its own block sequence number by its block the associated second stage block processor. Alternatively, the third stage sorting can be merged with the second stage creation of intermediate-form objects, although this reduces the number of stages which can be pipelined and may thereby reduce the performance of the rasteriser in some situations.

Further, is understood that while the arrangement described uses a plurality of separate microprocessors, the stages of the rasterising operation can be performed as well by a single, multi-tasking programmed general purpose digital computer such as a multi- processor IBM model 3090 computer, or an IBM PS/2 personal computer running a multi-tasking operating system such as the IBM OS/2 EXTENDED EDITION. Alternatively, different types of processors may be used for each stage in order to optimise individually the processors for each stage. Such different types of processor might then be connected to separate portions of memory rather than having access to the entire common memory, allowing concurrent access by the processors to different areas in memory and thereby increasing the communication bandwidth without requiring faster memory or processors.

The preparation of resource intermediate-form data may be combined with the second stage preparation of intermediate-form objects. This may avoid a possible difficulty in allocating an unknown amount of memory for resource data of unknown quantitiy. However eliminating parallel resource preparation may slow the performance of the rasteriser when a single datastream block requires the preparation of many resources, since a single block processor would have to do all the work.

It is understood that while the rasteriser 10 is described as a pre-processor separate from the printer 33, it is merely a matter of design choice whether to incorporate the rasteriser within the computer running the system or apparatus which produces the datastream, or to incorporate the rasteriser within the printer, or to construct the rasteriser as a separate component. Where a datastream producing system or apparatus is controlled by computers capable of multi-tasking, the rasterisation process described herein may be performed as an application-like post-processor. Where a datastream producing system or apparatus is controlled led by computers capable of multi-threading within single applications, the rasterisation process described herein may be performed within the application.

### Comparison With Prior Art

The rasteriser described herein outperforms known simple pipeline rasterisers, both by providing parallelism in each stage and by mitigating the load balancing problem. With the arrangement described it is possible to assign different numbers of processors statically or dynamically to the different stages based on the relative load on the stages.

The arrangement described offers important advantages over known page-parallel rasterisers. Since several processors work on the same page, substantially less memory is required for pagemaps for any given number of processors, resulting in cost savings on memory. The arrangement described also rasterises difficult pages faster than the page-parallel rasteriser, because a plurality of block, sort and bin processors cooperate to work on the blocks and regions of each pagemap. Lastly, processors are not idle even if page complexity is highly variable, and this does not require additional memory.

Although known 3-D rasterisers with Z-buffers use two main rasterization phases carried out in parallel by groups of processors, when handling 2-D objects they are unable to handle correctly combinations of mixing rules without requiring unlimited amounts of memory per pel. This is because, with a plurality of mixing modes, objects must be applied in the exact order in which they are specified, and, if they are not presented to the pagemap builder in that order, the pagemap builder must store all the values until the page is completed, and only then sort them by sequence number and apply them to the pagemap one by one for a each pel. Even for operations in the overpaint mode, for which Z-buffer rasterisers are best suited, it is necessary to store a depth value with each pel. Because pels are represented in printers by between one and four bits, and depth information typically requires at least sixteen bits, Z-buffer rasterisers require enormously more memory than the rasteriser described herein. This is because the rasteriser described takes advantage of the fact that the order of appearance of objects in the datastream reflects the relative depth of each object so that objects appearing later in the datastream are "closer" to the viewer and should therefore be painted over earlier objects on which they are superimposed.

Unlike the above-mentioned "Raster Processing Machine" (RPM), the rasteriser described herein converts the datastream into intermediate-form objects using parallel operating processors, eliminating the RPM bottleneck at that process. Perhaps more importantly, the rasteriser described herein produces a pagemap which places the objects correctly in the light of the mixing mode(s) applied, unlike the RPM rasteriser.

Finally, none of the known rasterisers provides parallel resource data preparation as described herein.

## Claims

1. Apparatus for converting an image data stream into output data for use in printing or displaying the image in a page comprising:
dividing means for dividing said image data into blocks of data, and
processing means for processing said blocks of data so as to generate said output data,
characterised in that
said dividing means comprises means (14) for selecting items of image data to form said blocks of data (16), each said block of data (16) comprising enough information about its state to enable it to be handled independently by the processing means;
and in that
said processing means comprises the following elements provided in a pipelined arrangement, each element consisting of a plurality of processors arranged to operate in parallel:
first converting means (22) for converting each item of image data in said blocks into an intermediate form object (20),
selecting means (24) for selecting said intermediate form objects so as to form groups of objects (26), each group relating to a geographical area of a page in which a portion of said image is to be printed or displayed, and
second converting means (30) for converting said groups of objects into output data (13) for use in printing or displaying each portion of said image in the corresponding geographical area of said page.

2. Apparatus as claimed in Claim 1 characterised in that said processing means comprises means for detecting items of image data in said blocks (16) which relate to the use of resources in the printing or displaying of said image,
means (27) for generating intermediate form data relating to each of said resources, and
means (27) for storing said resource intermediate form data (28).

3. Apparatus as claimed in Claim 2 characterised in that second converting means (30) comprises means for selecting said stored resource intermediate form data when required by said objects.

4. Apparatus as claimed in any one of the preceding claims, wherein the plurality of processors are programmed general purpose microprocessors.

5. Apparatus as claimed in Claim 4, wherein the microprocessors are programmed to perform more than one of the functions of the first converting means, selecting means and second converting means.

6. A method for converting an image data stream into output data for use in printing or displaying the image in a page comprising
dividing (11) said image data into blocks of data, and
processing said blocks of data so as to generate said output data,
characterised in that
said dividing operation (11) comprises selecting items of image data to form said blocks of data (16), each said block of data (16) comprising enough information about its state to enable it to be handled independently during said processing operation;
and in that
said processing operation comprising the following operations performed in a pipelined manner, each operation being performed by a plurality of processors arranged to operate in parallel;
(a) a first conversion operation (17) for converting each item of image data in said blocks into an intermediate form object (20),
(b) selecting (23) said intermediate form objects (20) so as to form groups of objects (26), each group relating to a geographical area of a page in which a portion of said image is to be printed or displayed, and
(c) a second conversion operation (31) for converting said groups of objects into output data (13) for use in printing or displaying each portion of said image in the corresponding geographical area of said page.

## Patentansprüche

1. Vorrichtung zur Umsetzung eines Bilddatenstroms in Ausgangsdaten zur Bilddruckstellung oder -anzeige einer Seite, die folgendes umfaßt:
Teilungsmittel zur Teilung der genannten Bilddaten in Datenblöcke, und
Verarbeitungsmittel zur Verarbeitung der genannten Datenblöcke, um die genannten Ausgangsdaten zu generieren,
dadurch charakterisiert, daß
das genannte Teilungsmittel ein Mittel (14) zur Auswahl einzelner Bilddaten umfaßt, um die genannten Datenblöcke (16) zu bilden, wobei jeder der genannten Datenblöcke (16) ausreichende Informationen über seinen Status umfaßt, so daß er vom Verarbeitungsmittel unabhängig behandelt werden kann; und daß
das genannte Verarbeitungsmittel die folgenden Elemente umfaßt, die in Pipeline-Anordnung bereitgestellt werden, wobei jedes Element aus einer Mehrzahl von Prozessoren besteht, die angeordnet sind, um parallel arbeiten zu können:
ein erstes Umsetzungsmittel (22) zur Umsetzung jeden Bilddatenteils innerhalb der genannten Blöcke in ein Objekt (20) in einer Zwischenform,
ein Auswahlmittel (24) zur Auswahl der genannten Objekte in einer Zwischenform, um Objektgruppen (26) zu bilden, wobei sich jede Gruppe auf einen geographischen Bereich einer Seite bezieht, auf der ein Teil des genannten Bilds gedruckt oder angezeigt werden soll, und
ein zweites Umsetzungsmittel (30) zur Umsetzung der genannten Objektgruppen in Ausgangsdaten (13), die zum Ausdruck oder zur Anzeige jeden Teils des genannten Bilds im entsprechenden geographischen Bereich der genannten Seite verwendet werden.

2. Eine Vorrichtung gemäß Anspruch 1, dadurch charakterisiert, daß das genannte Verarbeitungsmittel ein Mittel zur Erkennung von Bilddatenteilen in den genannten Blöcken (16) umfaßt, die mit der Verwendung von Ressourcen beim Ausdruck oder bei der Anzeige des genannten Bilds zusammenhängen,
ein Mittel (27) zur Erzeugung von Daten in einer Zwischenform, die sich auf jede der genannten Ressourcen beziehen, und
ein Mittel (27) zur Speicherung der genannten Daten (28) in einer Zwischenform.

3. Eine Vorrichtung gemäß Anspruch 2, dadurch charakterisiert, daß das zweite Umsetzungsmittel (30) ein Mittel zur Auswahl der genannten gespeicherten Daten in einer Zwischenform umfaßt, wenn diese von den genannten Objekten benötigt werden.

4. Eine Vorrichtung gemäß allen vorhergehenden Ansprüchen, wobei die Mehrzahl der Prozessoren programmierte Mehrzweck-Mikroprozessoren sind.

5. Eine Vorrichtung gemäß Anspruch 4, bei der die Mikroprozessoren so programmiert sind, daß sie mehr als eine der Funktionen des ersten Umsetzungsmittels, des Auswahlmittels und des zweiten Umsetzungsmittels ausführen.

6. Ein Verfahren zur Umsetzung eines Bilddatenstroms in Ausgangsdaten zum Ausdruck oder zur Anzeige des Bilds auf einer Seite, wobei das Verfahren folgendes umfaßt:
Teilung (11) der genannten Bilddaten in Datenblöcke, und
Verarbeitung der genannten Datenblöcke, um die genannten Ausgangsdaten zu erzeugen,
dadurch charakterisiert, daß
die genannte Teilungsoperation (11) die Auswahl von Teilen der Bilddaten zur Bildung der genannten Datenblöcke (16) umfaßt, wobei jeder genannte Datenblock (16) ausreichende Informationen über seinen Status umfaßt, so daß er während der genannten Verarbeitungsoperation unabhängig behandelt werden kann; und daß
die genannte Verarbeitungsoperation die folgenden Operationen umfaßt, die in Pipeline-Verarbeitung ausgeführt werden, wobei jede Operation von einer Mehrzahl von Prozessoren ausgeführt wird, die so organisiert sind, um parallel arbeiten zu können;
(a) eine erste Umsetzungsoperation (17) zur Umsetzung jeden Bilddatenteils innerhalb der genannten Blöcke in ein Objekt (20) in einer Zwischenform,
(b) die Auswahl (23) der genannten Objekte in einer Zwischenform (20), um Objektgruppen (26) zu bilden, wobei sich jede Gruppe auf einen geographischen Bereich einer Seite bezieht, auf der ein Teil des genannten Bilds gedruckt oder angezeigt werden soll, und
(c) eine zweite Umsetzungsoperation (31) zur Umsetzung der genannten Objektgruppen in Ausgangsdaten (13), die zum Ausdruck oder zur Anzeige jeden Teils des genannten Bilds im entsprechenden geographischen Bereich der genannten Seite verwendet werden.

## Revendications

1. Dispositif destiné à convertir un flux de données d'image en données de sortie destinées à être utilisées lors de l'impression ou de l'affichage de l'image en une page comprenant :
un moyen de division destiné à diviser lesdites données d'image en blocs de données, et
un moyen de traitement destiné à traiter lesdits blocs de données de façon à générer lesdites données de sortie,
caractérisé en ce que
ledit moyen de division comprend un moyen (14) destiné à sélectionner les éléments des données d'image afin de former lesdits blocs de données (16), chaque dit bloc de données (16) comprenant suffisamment d'informations concernant son état pour lui permettre d'être manipulé indépendamment par le moyen de traitement,
et en ce que
ledit moyen de traitement comprend les éléments suivants prévus suivant un agencement en pipeline, chaque élément étant constitué d'une pluralité de processeurs agencés de façon à fonctionner en parallèle :
un premier moyen de conversion (22) destiné à convertir chaque élément des données d'image dans lesdits blocs en un objet de forme intermédiaire (20),
un moyen de sélection (24) destiné à sélectionner lesdits objets de forme intermédiaire de façon à former des groupes d'objets (26), chaque groupe se rapportant à une zone géographique d'une page dans laquelle une partie de ladite image doit être imprimée ou affichée, et
un second moyen de conversion (30) destiné à convertir lesdits groupes d'objets en données de sortie (13) destinées a être utilisées lors de l'impression ou de l'affichage de chaque partie de ladite image dans la zone géographique correspondante de ladite page.

2. Dispositif selon la revendication 1, caractérisé en ce que ledit moyen de traitement comprend un moyen destiné à détecter des éléments des données d'image dans lesdits blocs (16) qui se rapportent à l'utilisation de ressources lors de l'impression ou de l'affichage de ladite image,
un moyen (27) destiné à générer des données sous forme intermédiaire se rapportant à chaque desdites ressources, et
un moyen (28) destiné à mémoriser lesdites données sous forme intermédiaire des ressources (28).

3. Dispositif selon la revendication 2, caractérisé en ce qu'un second moyen de conversion (30) comprend un moyen destiné à sélectionner lesdites données sous forme intermédiaire des ressources mémorisées, lorsque cela est demandé par lesdits objets.

4. Dispositif selon l'une quelconque des revendications précédentes, dans lequel la pluralité des processeurs sont des microprocesseurs d'usage général programmés.

5. Dispositif selon la revendication 4, dans lequel les microprocesseurs sont programmés pour exécuter plus d'une des fonctions du premier moyen de conversion, du moyen de sélection et du second moyen de conversion.

6. Procédé destiné à convertir un flux de données d'image en données de sortie destinées à être utilisées pour l'impression ou l'affichage de l'image en une page, comprenant
la division (11) desdites données d'image en blocs de données, et
le traitement desdits blocs de données de façon à générer lesdites données de sortie,
caractérisé en ce que
ladite opération de division (11) comprend la sélection des éléments des données d'image pour former lesdits blocs de données (16), chaque dit bloc de données (16) comprenant suffisamment d'informations concernant son état pour lui permettre d'être manipulé indépendamment pendant ladite opération de traitement,
et en ce que
ladite opération de traitement comprend les opérations suivantes exécutées en pipeline, chaque opération étant exécutée par une pluralité de processeurs agencés pour fonctionner en parallèle,
(a) une première opération de conversion (17) destinée à convertir chaque élément d'image dans lesdits blocs en un objet sous forme intermédiaire (20),
(b) la sélection (23) desdits objets sous forme intermédiaire (20) de façon à former des groupes d'objets (26), chaque groupe se rapportant à une zone géographique d'une page dans laquelle une partie de ladite image doit être imprimée ou affichée, et
(c) une seconde opération de conversion (31) destinée à convertir lesdits groupes d'objets en données de sortie (13) destinées à être utilisées lors de l'impression ou de l'affichage de chaque partie de ladite image dans la zone géographique correspondante de ladite page.
